# EUROPÄISCHE PATENTSCHRIFT

(11) **EP 1 268 259 B1**
(45) Veröffentlichungstag und Bekanntmachung des Hinweises auf die Patenterteilung: **23.06.2004**
(21) Anmeldenummer: 01919185.7
(22) Anmeldetag: 10.03.2001
(51) Int. Cl.: B62D 5/06, B62D 6/00, B62D 5/04

(54) **SERVOUNTERSTÜTZTES LENKSYSTEM EINES KRAFTFAHRZEUGS**
POWER-ASSISTED STEERING SYSTEM OF AN AUTOMOBILE
SYSTEME DE DIRECTION ASSISTEE POUR VEHICULE A MOTEUR

(30) Priorität: 20.03.2000 DE 10013711
(43) Veröffentlichungstag der Anmeldung: 02.01.2003
(73) Patentinhaber: ROBERT BOSCH GMBH, 70442 Stuttgart (DE)
(72) Erfinder: WEEBER, Kai, 71287 Weissach (DE); MUENZ, Rainer, 71254 Ditzingen (DE)
(86) Internationale Anmeldenummer: PCT/DE2001/000922
(87) Internationale Veröffentlichungsnummer: WO 2001/070555

(56) Entgegenhaltungen:
- DE-A- 4 031 316
- DE-A- 4 236 771
- PATENT ABSTRACTS OF JAPAN vol. 1999, no. 08, 30. Juni 1999 (1999-06-30) -& JP 11 078945 A (TOYOTA MOTOR CORP), 23. März 1999 (1999-03-23)

## Beschreibung

### Stand der Technik

Die vorliegende Erfindung betrifft ein servounterstütztes Lenksystem eines Kraftfahrzeugs, wobei das Lenksystem ein Lenkrad zur Vorgabe eines gewünschten Lenkwinkels der Räder des Kraftfahrzeugs, Fahrdynamikmittel zur Überlagerung des Lenkwinkels mit einem Korrekturwinkel, wobei der Korrekturwinkel nach dem Gesichtspunkt einer Erhöhung der Fahrstabilität und/oder des Fahrkomforts des Kraftfahrzeugs ermittelt wird, und einen Servoantrieb aufweist. Die Erfindung betrifft außerdem einen Servoantrieb eines servounterstützten Lenksystems eines Kraftfahrzeugs, der als variable Momentenunterstützung ausgebildet ist und der einen mit einem Wandlerstrom beaufschlagbaren Wandler als Stelleinrichtung für den Lenkwinkel der Räder des Kraftfahrzeugs und Mittel zum Ermitteln des Wandlerstromes in Abhängigkeit von zumindest der Geschwindigkeit des Kraftfahrzeugs aufweist. Schließlich betrifft die Erfindung ein Verfahren zum Ermitteln des Wandlerstroms eines als variable Momentenunterstützung ausgebildeten Servoantriebs eines servounterstützten Lenksystems eines Kraftfahrzeugs, wobei der Servoantrieb einen mit dem Wandlerstrom beaufschlagbaren Wandler als Stelleinrichtung für den Lenkwinkel der Räder des Kraftfahrzeugs aufweist und der Wandlerstrom in Abhängigkeit von zumindest der Geschwindigkeit des Kraftfahrzeugs ermittelt wird.

Bei den aus dem Stand der Technik bekannten Lenksystemen ist es bekannt, einen Servoantrieb zur Momentenunterstützung (Servolenkung) vorzusehen. Bei den bekannten Servoantrieben wird unterschieden nach hydraulischen, elektrohydraulischen und elektrischen Systemen. Bei hydraulischen Systemen gibt es eine Unterscheidung zwischen Systemen mit einer fest vorgegebenen Momentenunterstützung (normale Servolenkung) und einer variablen Momentenunterstützung, bei der der Grad der Momentenunterstützung in Abhängigkeit von der Geschwindigkeit des Kraftfahrzeugs gesteuert wird. Bei geringer Geschwindigkeit, bspw. beim Rangieren, ist der Kraftaufwand zur Betätigung des Lenkrads durch einen Fahrer sehr gering. Mit zunehmender Geschwindigkeit wird der Kraftaufwand für den Fahrer höher. Durch die variable Momentenunterstützung wird erreicht, dass das Lenksystem bei geringen Geschwindigkeiten besonders leichtgängig ist, ohne jedoch bei höheren Geschwindigkeiten schwammig zu wirken. Der Aufbau und die Funktion einer Servolenkung können dem Aufsatz "Servorantriebe für Vorder- und Hinterradlenkungen in Personenwagen", H. Bischof, G. Dräger, W. Schleuter, Beitrag zur Tagung "Allradlenkungen", Haus der Technik, Essen, 28./29.11.1989, Seiten 1 bis 16 entnommen werden, auf den hier ausdrücklich Bezug genommen wird.

Aus dem Stand der Technik ist es des Weiteren bekannt, in Lenksystemen Fahrdynamikmittel vorzusehen, um den durch das Lenkrad vorgegebenen Lenkwinkel der Räder mit einem Korrekturwinkel zu überlagern. Die Fahrdynamikmittel werden auch als fahrdynamisches Lenksystem (FLS) bezeichnet. Zur Winkelüberlagerung wird ein sogenanntes Überlagerungsgetriebe eingesetzt. Der Aufbau und die Funktionsweise eines fahrdynamischen Lenksystem ist ausführlich in der DE 40 31 316 A1 beschrieben, auf die hier ausdrücklich Bezug genommen wird. Mit Hilfe eines fahrdynamischen Lenksystems kann die Fahrdynamik, Fahrsicherheit sowie der Fahrzeugkomfort verbessert werden. Eine kraftunterstützende Funktion (Servolenkung) kann damit jedoch nicht erreicht werden. Der zu dem vorgegebenen Lenkwinkel hinzuaddierte Korrekturwinkel verändert den tatsächlichen Lenkwinkel der Räder. Der von dem Fahrer vorgegebene Lenkradeinschlag wird dabei nicht verändert und behält seine vorgegebene Stellung bei.

Bei servounterstützten Lenksystemen, die sowohl einen Servoantrieb zur Momentenunterstützung als auch Fahrdynamikmittel aufweisen, sind die Fahrdynamikmittel üblicherweise zwischen dem Lenkrad und dem Servoantrieb angeordnet. Bei einer variablen Momentenunterstützung hat das jedoch zur Folge, dass der Servoantrieb die Dynamik der Fahrdynamikmittel, insbesondere die Dynamik eines Elektromotors (vgl. DE 40 31 316 A1) der Fahrdynamikmittel, beeinflusst. Die Leistungsfähigkeit der Fahrdynamikmittel ist nicht über den gesamten Geschwindigkeitsbereich des Kraftfahrzeugs gleich. Bei hoher Kraftfahrzeuggeschwindigkeit ist die Momentenunterstützung so gering, dass der Elektromotor der Fahrdynamikmittel gegen ein sehr hohes Gegenmoment arbeiten muss. Die Folge davon ist, dass der Elektromotor nur verlangsamt beschleunigen kann und die Lenkeingriffe der Fahrdynamikmittel das Kraftfahrzeug nicht ausreichend schnell und zuverlässig stabilisieren bzw. den Fahrkomfort des Kraftfahrzeugs erhöhen können.

Ein Lenksystem, Servoantrieb und verfahren nach dem Oberbegriff der unabhängigen Patentansprüche ist aus der JP 11-078 945 bekannt.

Deshalb ist es die Aufgabe der vorliegenden Erfindung, bei servounterstützten Lenksystemen, die sowohl Fahrdynamikmittel als auch eine variable Momentenunterstützung aufweisen, richerzustellen, dass die Fahrdynamikmittel die Fahrstabilität und den Fahrkomfort des Kraftfahrzeugs besonders reaktionsschnell und zuverlässig verbessern.

Diese aufgabe wird mit den Merkmalen der unabhängigen Patentansprüche gelöst. Der Servorantrieb ist als eine variable Momentenunterstützung ausgebildet ist, wobei der Grad der Momentenunterstützung von der Geschwindigkeit des Kraftfahrzeugs und von mindestens einer den Korrekturwinkel charakterisierenden Größe der Fahrdynamikmittel abhängig ist.

Bei dem Lenksystem besitzt der als variable Momentenunterstützung ausgebildete Servoantrieb somit nicht nur die Geschwindigkeit des Kraftfahrzeugs als Eingangsgröße. Der Servoantrieb ist um mindestens eine weitere Eingangsgröße ergänzt, durch die der Grad der Momentenunterstützung auch in Abhängigkeit von den Lenkeingriffen variiert werden kann, die von den Fahrdynamikmitteln gefordert werden. Durch diese zusätzliche Eingangsgrößen ist es möglich, den Grad der Momentenunterstützung durch den Servoantrieb derart einzustellen, dass die Leistungsfähigkeit der Fahrdynamikmittel über den gesamten Geschwindigkeitsbereich des Kraftfahrzeugs nahezu konstant ist. Dadurch können die Fahrdynamikmittel die Fahrstabilität und den Fahrkomfort des Kraftfahrzeugs besonders reaktionsschnell und zuverlässig verbessern.

Gemäß der vorliegenden Erfindung wird vorgeschlagen, dass die Fahrdynamikmittel einen Motor zur Erzeugung des Korrekturwinkels aufweisen, wobei die Größen der Fahrdynamikmittel, die den Korrekturwinkel charakterisieren, als die Ist-Beschleunigung des Motors und/oder als die Soll-Beschleunigung des Motors ausgebildet sind. Der Motor ist vorzugsweise als ein Elektromotor ausgebildet. Die Ist-Beschleunigung ist die gemessene Beschleunigung des Motors der Fahrdynamikmittel. Die Soll-Beschleunigung ist die von den Fahrdynamikmitteln errechnete Beschleunigung des Motors. Der von den Fahrdynamikmitteln ermittelte Korrekturwinkel, insbesondere die Dauer der Überlagerung des Lenkwinkels mit dem Korrekturwinkel, wird vor allem durch diese beiden Größen charakterisiert.

Gemäß einer bevorzugten Ausführungsform der vorliegenden Erfindung wird vorgeschlagen, dass der Servoantrieb als eine hydraulische Momentenunterstützung ausgebildet ist. Vorteilhafterweise weist der Servoantrieb einen mit einem Wandlerstrom beaufschlagbaren Wandler als Stelleinrichtung für den Lenkwinkel der Räder des Kraftfahrzeugs und Mittel zum Ermitteln des Wandlerstroms in Abhängigkeit von der Geschwindigkeit des Kraftfahrzeugs, der Ist-Beschleunigung des Motors und der Soll-Beschleunigung des Motors auf. Der Wandler dient als Stelleinrichtung in dem Lenkgetriebe des Lenksystems und ist beispielsweise als ein Proportionalventil ausgebildet.

Gemäß einer bevorzugten Ausführungsform der vorliegenden Erfindung weisen die Mittel zum Ermitteln des Wandlerstromes erste Mittel zum Bilden eines ersten geschwindigkeitsabhängigen Wandlerstroms, zweite Mittel zum Bilden eines zweiten von der Ist-Beschleunigung des Motors und der Soll-Beschleunigung des Motors abhängigen Wandlerstromes und dritte Mittel zum Bestimmen des Wandlerstroms aus dem ersten Wandlerstrom und dem zweiten Wandlerstrom auf.

Die ersten Mittel weisen vorteilhafterweise ein Tiefpassfilter zum Filtern der Geschwindigkeitswerte des Kraftfahrzeugs und eine Kennlinie auf, der der Zusammenhang zwischen den gefilterten Geschwindigkeitswerten und Werten für den ersten Wandlerstrom zu entnehmen ist. Durch die Filterung der Geschwindigkeitswerte des Kraftfahrzeugs wird der Grad der Momentenunterstützung der tatsächlichen Geschwindigkeit des Kraftfahrzeugs langsam angepasst. Dadurch wird der subjektive Eindruck für den Fahrer verbessert, insbesondere bei Fahrmanövern, in denen sich die Geschwindigkeit des Kraftfahrzeugs abrupt ändert, bspw. bei einer Vollbremsung. Die Kennlinie ist in der Regel nichtlinear. Mit Hilfe der Kennlinie kann ein gefilterter Geschwindigkeitswert auf dem entsprechenden Wert des ersten Wandlerstrom abgebildet werden.

Es wird des Weiteren vorgeschlagen, dass die zweiten Mittel einen Differenzierer zum Bilden einer Differenzbeschleunigung aus der Differenz der Ist-Beschleunigung des Motors und der Soll-Beschleunigung des Motors, einen Betragsbildner zum Bilden des Betrags der Differenzbeschleunigung, einen Multiplizierer zur Multiplikation der Differenzbeschleunigung mit einem vorgebbaren Faktor und ein Totzeitglied zum Bilden des zweiten Wandlerstroms durch Beaufschlagen des mit dem Faktor multiplizierten Betrags der Differenzbeschleunigung mit einer vorgebbaren Totzeit aufweisen. Der Totbereich dient dazu, bei kleinen Motorbewegungen keine unnötigen Schwankungen in der Momentenunterstützung hervorzurufen. Durch Variation des vorgebbaren Faktors kann die Amplitude des zweiten Wandlerstroms und damit der Einfluss des zweiten Wandlerstroms auf den Gesamt-Wandlerstrom verändert werden.

Die dritten Mittel weisen vorteilhafterweise einen Addierer zum Bilden des Wandlerstroms durch Addition des ersten Wandlerstroms und des zweiten Wandlerstroms auf. Der ermittelte Wandlerstrom wird an den Wandler angelegt, der dann die entsprechende Momentenunterstützung bewirkt.

Als eine weitere Lösung der Aufgabe der vorliegenden Erfindung wird ausgehend von dem Servoantrieb eines servounterstützten Lenksystems der eingangs genannten Art ein Servoantrieb gemäß Anspruch 8 vorgeschlagen.

Schließlich wird als eine weitere Lösung der Aufgabe der vorliegenden Erfindung ausgehend von dem Verfahren zum Ermitteln des Wandlerstroms eines Servoantriebs der eingangs genannten Art ein Verfahren gemäß Anspruch 9 vorgeschlagen.

Ein bevorzugtes Ausführungsbeispiel der vorliegenden Erfindung wird im Folgenden anhand der Zeichnungen näher erläutert. Es zeigen:
- Figur 1: eine symbolische Darstellung eines erfindungsgemäßen Lenksystems gemäß einer bevorzugten Ausführungsform; und
- Figur 2: ein Blockschaltbild eines erfindungsgemäßen Servoantriebs des servounterstützten Lenksystems aus Figur 1 gemäß einer bevorzugten Ausführungsform.

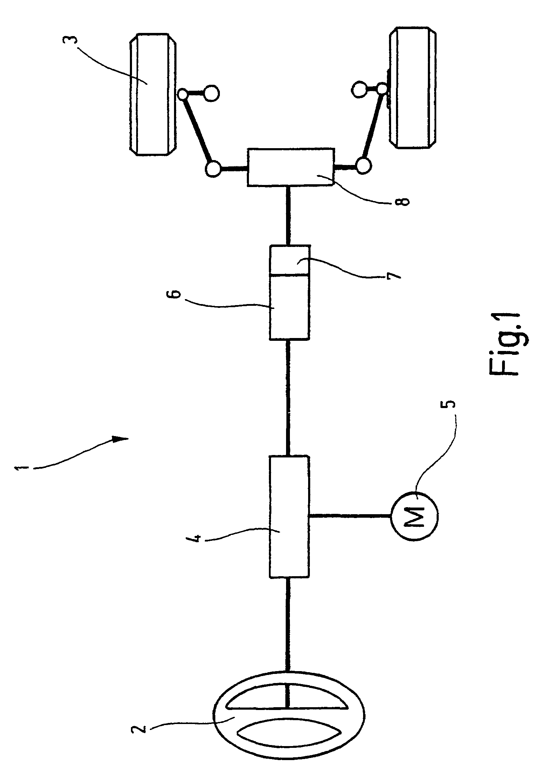

In Figur 1 ist das erfindungsgemäße servounterstützte Lenksystem eines Kraftfahrzeugs in seiner Gesamtheit mit dem Bezugszeichen 1 bezeichnet. Das Lenksystem 1 weist ein Lenkrad 2 zur Vorgabe eines gewünschten Lenkwinkels der lenkbaren Räder 3 des Kraftfahrzeugs auf. Dem Lenkrad 2 nachgeordnet weist das Lenksystem 1 Fahrdynamikmittel 4 zur Überlagerung des Lenkwinkels mit einem Korrekturwinkel auf. Der Aufbau und die Funktionsweise der Fahrdynamikmittel 4 ist ausführlich in der DE 40 31 316 A1 beschrieben, auf die hier ausdrücklich Bezug genommen wird. Der Korrekturwinkel wird nach dem Gesichtpunkt einer Erhöhung der Fahrstabilität und/oder des Fahrkomforts des Kraftfahrzeugs ermittelt. Die Fahrdynamikmittel 4 weisen einen Motor 5, insbesondere einen Elektromotor, zur Erzeugung des Korrekturwinkels auf.

Den Fahrdynamikmitteln 4 nachgeordnet weist das Lenksystem 1 einen Servoantrieb 6 auf, der als eine variable hydraulische Momentenunterstützung ausgebildet ist. Selbstverständlich kann der Servorantrieb 6 auch als eine elektrohydraulische oder als eine elektrische Momentenunterstützung ausgebildet sein. Der Servorantrieb 6 weist eine als Wandler 7 ausgebildete Stelleinrichtung für ein Lenkgetriebe 8 des Lenksystems 1 auf, über die der gewünschte Lenkwinkel der Räder 3 des Kraftfahrzeugs eingestellt wird. Der Wandler 7 ist bspw. als ein Proportionalventil ausgebildet.

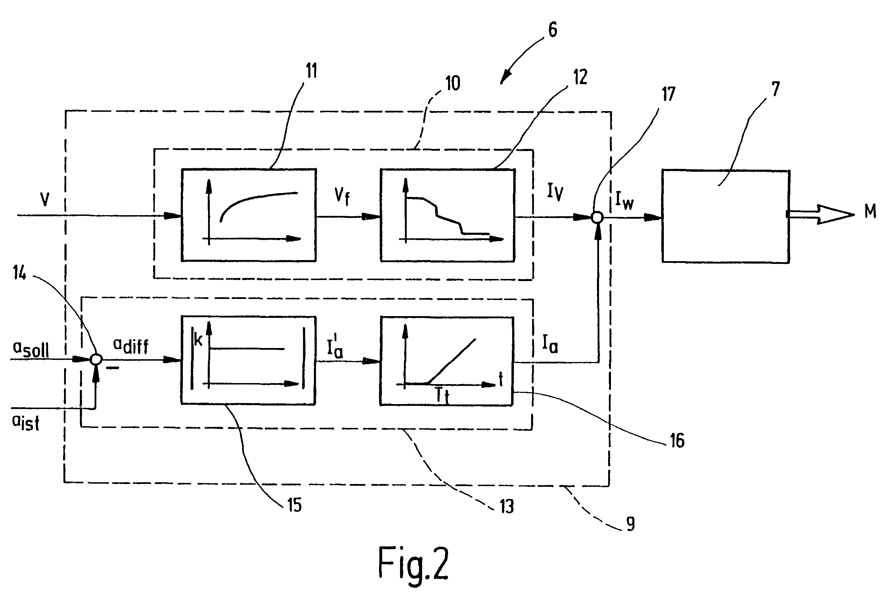

In Figur 2 ist ein Blockschaltbild des Servoantriebs 6 dargestellt. Der Grad der Momentenunterstützung M des Servoantriebs 6 wird in Abhängigkeit von der Geschwindigkeit V des Kraftfahrzeugs gesteuert. Erfindungsgemäß wird der Grad der Momentenunterstützung M zusätzlich von mindestens einer weiteren den Korrekturwinkel charakterisierenden Größe der Fahrdynamikmittel 4 gesteuert. In dem Ausführungsbeispiel aus Figur 2 sind als weitere Eingangsgrößen des Servoantriebs 6 die Ist-Beschleunigung a_ist des Motors 5 der Fahrdynamikmittel 4 und die Soll-Beschleunigung a_soll des Motors 5 vorgesehen. Der Wandler 7 des Servoantriebs 6 ist mit einem Wandlerstrom I_w beaufschlagbar, der ein Maß für den Grad der Momentenunterstützung M ist. Der Servoantrieb 6 weist Mittel 9 zum Ermitteln des Wandlerstrom I_w in Abhängigkeit von der Geschwindigkeit V des Kraftfahrzeugs, der Ist-Beschleunigung a_ist und der Soll-Beschleunigung a_soll des Motors 5 auf.

Die Mittel 9 zum Ermitteln des Wandlerstrom I_w weisen ihrerseits erste Mittel 10 zum Bilden eines ersten geschwindigkeitsabhängigen Wandlerstrom I_V auf. Die ersten Mittel 10 umfassen ein Tiefpassfilter 11 zum Filtern der Geschwindigkeitswerte V des Kraftfahrzeugs und eine Kennlinie 12. Der Kennlinie 12 kann der Zusammenhang zwischen den gefilterten Geschwindigkeitswerten V_f und den entsprechenden Werten für den ersten Wandlerstrom I_V entnommen werden.

Die Mittel 9 zum Ermitteln des Wandlerstroms I_w weisen außerdem zweite Mittel 13 zum Bilden eines zweiten von der Ist-Beschleunigung a_ist und der Soll-Beschleunigung a_soll des Motors 5 abhängigen Wandlerstrom I_a auf. Die zweiten Mittel 13 umfassen einen Differenzierer 14 zum Bilden einer Differenzbeschleunigung a_diff aus der Differenz der Ist-Beschleunigung a_ist und der Soll-Beschleunigung a_soll des Motors 5. Außerdem umfassen sie einen Betragsbildner zum Bilden des Betrags der Differenzbeschleunigung a_diff und einen Multiplizierer zur Multiplikation der Differenzbeschleunigung a_diff mit einem vorgebbaren Faktor k. Durch Variation des Faktors k kann die Amplitude des zweiten Wandlerstroms I_a und damit der Einfluss des zweiten Wandlerstroms I_a auf den Gesamt-Wandlerstrom I_w verändert werden. In dem Ausführungsbeispiel aus Figur 2 sind der Betragsbildner und der Multiplizierer in einem gemeinsamen Funktionsblock 15 zusammengefasst. Schließlich umfassen die zweiten Mittel 13 ein Totzeitglied 16 zum Bilden des zweiten Wandlerstroms I_a durch Beaufschlagen des mit dem Faktor k multiplizierten Betrags I'_a der Differenzbeschleunigung a_diff mit einer vorgebbaren Totzeit T_t.

Schließlich weisen die Mittel 9 zum Ermitteln des Wandlerstrom I_w als ein Addierer ausgebildete dritte Mittel 17 auf, die durch Addition des ersten Wandlerstrom I_V und des zweiten Wandlerstroms I_a den Wandlerstrom I_w bilden.

Der Wandlerstrom I_w des erfindungsgemäßen Servoantriebs 6 wird also sowohl in Abhängigkeit der Geschwindigkeit V des Kraftfahrzeugs als auch in Abhängigkeit von dem Betriebszustand der Fahrdynamikmittel 4 ermittelt. Der Wandlerstrom I_w wird an den Wandler 7 geführt, der eine entsprechende Momentenunterstützung M bewirkt. Mit Hilfe des erfindungsgemäßen Servoantriebs 6 ist es möglich, die Leistungsfähigkeit der Fahrdynamikmittel 4 über den gesamten Geschwindigkeitsbereich des Kraftfahrzeug nahezu konstant zu halten. Dadurch kann die Fahrstabilität und der Fahrkomfort des Kraftfahrzeugs besonders schnell und zuverlässig erhöht werden.

## Patentansprüche

1. Servounterstütztes Lenksystem (1) eines Kraftfahrzeugs, wobei das Lenksystem (1) ein Lenkrad (2) zur Vorgabe eines gewünschten Lenkwinkels der Räder (3) des Kraftfahrzeugs, Fahrdynamikmittel (4) zur Überlagerung des Lenkwinkels mit einem Korrekturwinkel, wobei der Korrekturwinkel nach dem Gesichtspunkt einer Erhöhung der Fahrstabilität und /oder des Fahrkomforts des Kraftfahrzeugs ermittelt wird, und einem Servoantrieb (6) aufweist, wobei der Servoantrieb (6) eine variable Momentenunterstützung (M) aufweist, wobei der Grad der Momentenunterstützung (M) von der Geschwindigkeit (V) des Kraftfahrzeugs und von mindestens einer den Korrekturwinkel charakterisierenden Größe der Fahrdynamikmittel (4) abhängig ist, **dadurch gekennzeichnet, dass** die Fahrdynamikmittel (4) einen Motor (5) zur Erzeugung des Korrekturwinkels aufweisen, wobei die Großen der Fahrdynamikmittel (4), die den Korrekturwinkel charakterisieren, als eine Ist-Beschleunigung (a_ist) des Motors (5) und/oder als eine Soll-Beschleunigung (a_soll) des Motor (5) augebildet sind.

2. Lenksystem (1) nach Anspruch 1, **dadurch gekennzeichnet, dass** der Servoantrieb (6) als eine hydraulische Momentenunterstützung ausgebildet ist.

3. Lenksystem (1) nach Anspruch 1 oder 2, **dadurch gekennzeichnet, dass** der Servoantrieb (6) einen mit einem Wandlerstrom (I_w) beaufschlagbaren Wandler (7) als Stelleinrichtung für den Lenkwinkel der Räder (3) des Kraftfahrzeugs und Mittel (9) zum Ermitteln des Wandlerstroms (I_w) in Abhängigkeit von der Geschwindigkeit (V) des Kraftfahrzeugs, der Ist-Beschleunigung (a_ist) des Motors (5) und der Soll-Beschleunigung (a_soll) des Motors (5) aufweist.

4. Lenksystem (1) nach Anspruch 3, **dadurch gekennzeichnet, dass** die Mittel (9) zum Ermitteln des Wandlerstroms (I_w) erste Mittel (10) zum Bilden eines ersten geschwindigkeitsabhängigen Wandlerstroms (I_V), zweite Mittel (13) zum Bilden eines zweiten von der Ist-Beschleunigung (a_ist) des Motors (5) und der Soll-Beschleunigung (a_soll) des Motors (5) abhängigen Wandlerstroms (I_a) und dritte Mittel (17) zum Bilden des Wandlerstroms (I_w) aus dem ersten Wandlerstrom (I_V) und dem zweiten Wandlerstrom (I_a) aufweisen.

5. Lenksystem (1) nach Anspruch 4, **dadurch gekennzeichnet, dass** die ersten Mittel (10) ein Tiefpassfilter (11) zum Filtern der Geschwindigkeitswerte (V) des Kraftfahrzeugs und eine Kennlinie (12) aufweisen, der der Zusammenhang zwischen den gefilterten Geschwindigkeitswerten (V_f) und Werten für den ersten Wandlerstrom (I_V) zu entnehmen ist.

6. Lenksystem (1) nach Anspruch 4 oder 5, **dadurch gekennzeichnet, dass** die zweiten Mittel (13) einen Differenzierer (14) zum Bilden einer Differenzbeschleunigung (a_diff) aus der Differenz der Ist-Beschleunigung (a_ist) des Motors (5) und der Soll-Beschleunigung (a_soll) des Motors (5), einen Betragsbildner (15) zum Bilden des Betrags der Differenzbeschleunigung (a_diff), einen Multiplizierer (15) zur Multiplikation der Differenzbeschleunigung (a_diff) mit einem vorgebbaren Faktor (k) und ein Totzeitglied (16) zum Bilden des zweiten Wandlerstroms (I_a) durch Beaufschlagen des mit dem Faktor (k) multiplizierten Betrags (I'_a) der Differenzbeschleunigung (a_diff) mit einer vorgebaren Totzeit (T_t) aufweisen.

7. Lenksystem (1) nach einem der Ansprüche 4 bis 6, **dadurch gekennzeichnet, dass** die dritten Mittel (17) einen Addierer zum Bilden des Wandlerstroms (I_w) durch Additiion des ersten Wandlerstroms (I_V) und des zweiten Wandlerstroms (I_a) aufweisen.

8. Servoantrieb (6) eines servounterstützten Lenksystems (1) eines Kraftfahrzeugs, der eine variable Momentenunterstützung aufweist und der einen mit einem Wandlerstrom (I_w) beaufschlagbaren Wandler (7) als Stelleinrichtung für den Lenkwinkel der Räder (3) des Kraftfahrzeugs und Mittel (9) zum Ermitteln des Wandlerstromes (I_w) in Abhängigkeit von zumindest der Geschwindigkeit (V) des Kraftfahrzeugs aufweist, wobei das Lenksystem (1) Fahrdynamikmittel (4) zur Überlagerung des Lenkwinkels mit einem Korrekturwinkel aufweist, wobei der Korrekturwinkel nach dem Gesichtspunkt einer Erhöhung der Fahrstabilität und/oder des Fahrkomforts des Kraftfahrzeugs ermittelt wird, wobei die Mittel (9) zum Ermitteln des Wandlerstroms (I_w) diesen in Abhängigkeit von mindestens einer den Korrekturwinkel charakterisierenden Größe der Fahrdynamikmittel (4) ermitteln, und wobei
die Fahrdynamikmittel (4) einen Motor (5) zur Erzeugung des Korrekturwinkels aufweisen, **dadurch gekennzeichnet, dass** in dem Servoantrieb (6) als die Größen der Fahrdynamikmittel (4), die den Korrekturwinkel charakterisieren, die Ist-Beschleunigung (a_ist,) des Motors (5) und/oder als die Soll-Beschleunigung (a_soll) des Motors (5) verarbeitet werden.

9. Verfahren zum Ermitteln des Wandlerstroms (I_w) eines als variable Momentenunterstützung ausgebildeten Servoantriebs (6) eines servounterstützten Lenksystems (1) eines Kraftfahrzeugs, wobei der Servoantrieb (6) einen mit
dem Wandlerstrom (I_w) beaufschlagbaren Wandler (7) als Stelleinrichtung für den Lenkwinkel der Räder (3) des Kraftfahrzeugs aufweist und der Wandlerstrom (I_w) in Abhängigkeit von zumindest der Geschwindigkeit (V) des Kraftfahrzeugs ermittelt wird, wobei das Lenksystem (1) Fahrdynamikmittel (4) zur Überlagerung des Lenkwinkels mit einem Korrekturwinkel aufweist, wobei der Korrekturwinkel nach dem Gesichtspunkt einer Erhöhung der Fahrstabilität und/oder des Fahrkomforts des Kraftfahrzeugs ermittelt wird, wobei der Wandlerstrom (I_w) in Abhängigkeit von mindestens einer den Korrekturwinkel charakterisierenden Größe der Fahrdynamikmittel (4) ermittelt wird, und wobei
die Fahrdynamikmittel (4) einen Motor (5) zur Erzeugung des Korrekturwinkels aufweisen, **dadurch gekennzeichnet, dass** als die Größen der Fahrdynamikmittel (4), die den Korrekturwinkel charakterisieren, die Ist-Beschleunigung (a_ist) des Motors (5) und/oder als die Soll-Beschleunigung (a_soll) des Motors (5) verarbeitet werden.

## Claims

1. Power-assisted steering system (1) of a motor vehicle, in which the steering system (1) has a steering wheel (2) for predefining a desired steering angle of the wheels (3) of the motor vehicle, means (4) for controlling the dynamics of vehicle movement for superimposing a correction angle on the steering angle - the correction angle being determined with a view to increasing the driving stability and/or the driving comfort of the motor vehicle - and a servodrive (6), the servodrive (6) having a variable torque support (M) and the degree of torque support (M) being dependent on the velocity (V) of the motor vehicle and on at least one parameter of the means (4) for controlling the dynamics of vehicle movement, which means (4) characterizes the correction angle, **characterized in that** the means (4) for controlling the dynamics of vehicle movement has an engine (5) for generating the correction angle, the parameters of the means (4) for controlling the dynamics of vehicle movement which parameters characterize the correction angle, being formed as an actual acceleration (a-act) of the engine (5) and/or as a setpoint acceleration (a-setp) of the engine (5).

2. Steering system (1) according to Claim 1, **characterized in that** the servodrive (6) is embodied as a hydraulic torque support.

3. Steering system (1) according to Claim 1 or 2, **characterized in that** the servodrive (6) has a transducer (7), to which a transducer current (I_w) can be applied, as an actuator device for the steering angle of the wheels (3) of the motor vehicle, and means (9) for determining the transducer current (I_w) as a function of the velocity (V) of the vehicle, the actual acceleration (a_act) of the engine (5) and the setpoint acceleration (a_setp) of the engine (5).

4. Steering system (1) according to Claim 3, **characterized in that** the means (9) for determining the transducer current (I_w) has first means (10) for forming a first velocity-dependent transducer current (I_V), second means (13) for forming a second transducer current (I_a) which is dependent on the actual acceleration (a_act) of the engine (5) and the setpoint acceleration (a_setp) of the engine (5), and third means (17) for forming the transducer current (I_w) from the first transducer current (I_V) and the second transducer current (I_a).

5. Steering system (1) according to Claim 4, **characterized in that** the first means (10) has a low-pass filter (11) for filtering the velocity values (V) of the motor vehicle, and a characteristic curve (12) from which the relationship between the filtered velocity values (V_f) and values for the first converter current (I_V) can be obtained.

6. Steering system (1) according to Claim 4 or 5, **characterized in that** the second means (13) has a difference former (14) for forming a differential acceleration (a_diff) from the difference between the actual acceleration (a_act) of the engine (5) and the setpoint acceleration (a_setp) of the engine (5), an absolute value former (15) for forming the absolute value of the differential acceleration (a_diff), a multiplier (15) for multiplying the differential acceleration (a_diff) by a predefinable factor (k), and a delay time element (16) for forming the second transducer current (I_a) by applying a predefinable delay time (T_t) to the absolute value (I'_a) of the differential acceleration (a_diff) which is multiplied by the factor (k).

7. Steering system (1) according to one of Claims 4 to 6, **characterized in that** the third means (17) has an adder for forming the transducer current (I_w) by adding the first transducer current (I_V) and the second transducer current (I_a).

8. Servodrive (6) of a power-assisted steering system (1) of a motor vehicle which has a variable torque support and which has a transducer (7), to which a transducer current (I_w) can be applied, as an actuator device for the steering angle of the wheels (3) of the motor vehicle and means (9) for determining the transducer current (I_w) as a function of at least the velocity (V) of the motor vehicle, the steering system (1) having means (4) for controlling the dynamics of vehicle movement for superimposing a correction angle on the steering angle, the correction angle being determined with a view to increasing the driving stability and/or the driving comfort of the motor vehicle, the means (9) for determining the transducer current (I_w) determining it as a function of at least one parameter of the means (4) for controlling the dynamics of vehicle movement which characterizes the correction angle, and the means (4) for controlling the dynamics of vehicle movement having an engine (5) for generating the correction angle, **characterized in that**, in the servodrive (6), the actual acceleration (a_act) of the engine (5) and/or the setpoint acceleration (a_setp) of the engine (5) are processed as the parameters of the means (4) for controlling the dynamics of vehicle movement which characterize the correction angle.

9. Method for determining the transducer current (I_w) of a servodrive (6), embodied as a variable torque support, of a power-assisted steering system (1) of a motor vehicle, the servodrive (6) having a transducer (7), to which the transducer current (I_w) can be applied, as an actuator device for the steering angle of the wheels (3) of the motor vehicle, and the transducer current (I_w) being determined as a function of at least the velocity (V) of the motor vehicle, the steering system (1) having means (4) for controlling the dynamics of vehicle movement for superimposing a correction angle on the steering angle, the correction angle being determined with a view to increasing the driving stability and/or the driving comfort of the motor vehicle, the transducer current (I_w) being determined as a function of at least one parameter of the means (4) for controlling the dynamics of vehicle movement which characterizes the correction angle, and the means (4) for controlling the dynamics of vehicle movement having an engine (5) for generating the correction angle, **characterized in that** the actual acceleration (a_act) of the engine (5) and/or the setpoint acceleration (a_setp) of the engine (5) being processed as parameters of the means (4) for controlling the dynamics of vehicle movement which characterize the correction angle.

## Revendications

1. Système de direction assistée (1) d'un véhicule automobile, dans lequel le système de direction (1) comprend un volant de direction (2) destiné à imposer un angle de braquage souhaité des roues (3) du véhicule automobile, des moyens de dynamique de marche (4) destinés à superposer un angle de correction à l'angle de braquage, l'angle de correction étant calculé du point de vue d'une amélioration de la stabilité de marche et/ou du confort de marche du véhicule automobile, et une servocommande (6), la servocommande (6) présentant une assistance de couple variable (M), le degré de l'assistance de couple (M) étant fonction de la vitesse (V) du véhicule automobile et d'au moins une grandeur des moyens de dynamique de marche (4) qui **caractérise** l'angle de correction,
**caractérisé en ce que**
les moyens de dynamique de marche (4) présentent un moteur (5) destiné à produire l'angle de correction, les grandeurs des moyens de dynamique de marche (4) caractérisant l'angle de correction sous la forme d'une accélération réelle (a_ist) du moteur (5) et/ou sous la forme d'une accélération de consigne (a_soll) du moteur (5).

2. Système de direction (1) selon la revendication 1,
**caractérisé en ce que**
la servocommande (6) est constituée par une assistance de couple hydraulique.

3. Système de direction (1) selon la revendication 1 ou 2,
**caractérisé en ce que**
la servocommande (6) présente un convertisseur (7) pouvant être attaqué avec un courant de convertisseur (I_w) en tant que servomoteur pour l'angle de braquage des roues (3) du véhicule automobile et des moyens (9) servant à déterminer le courant de convertisseur (I_w) en fonction de la vitesse (V) du véhicule automobile, de l'accélération réelle (a_ist) du moteur (5) et de l'accélération de consigne (a_soll) du moteur (5).

4. Système de direction (1) selon la revendication 3,
**caractérisé en ce que**
les moyens (9) servant à déterminer le courant de convertisseur (I_w) comprennent des premiers moyens (10) servant à former un premier courant de convertisseur (I_V) fonction de la vitesse, des deuxièmes moyens (13) servant à former un deuxième courant de convertisseur (I_a) fonction de l'accélération réelle (a_ist) du moteur (5) et de l'accélération de consigne (a_soll) du moteur (5), et des troisièmes moyens (17) servant à former le courant de convertisseur (I_w) à partir du premier courant de convertisseur (I_V) et du deuxième courant de convertisseur (I_a).

5. Système de direction (1) selon la revendication 4,
**caractérisé en ce que**
les premiers moyens (10) comprennent un filtre passe-bas (11) servant à filtrer les valeurs de vitesse (V) du véhicule automobile et une caractéristique (12) d'où l'on peut déduire la relation entre les valeurs de vitesse filtrées (V_f) et des valeurs pour le premier courant de convertisseur (I_V).

6. Système de direction (1) selon la revendication 4 ou 5,
**caractérisé en ce que**
les deuxièmes moyens (13) comprennent un différenciateur (14) servant à former une accélération différentielle (a_diff) à partir de la différence entre l'accélération réelle (a_ist) du moteur (5) et l'accélération de consigne (a_soll) du moteur (5), un formateur de valeur absolue (15) servant à former la valeur absolue de l'accélération différentielle (a_diff), un multiplicateur (15) servant à multiplier l'accélération différentielle (a_diff) par un facteur (k) pouvant être prédéterminé, et un organe à temps mort (16) servant à former le deuxième courant de convertisseur (I_a) en attaquant la valeur absolue (I'_a) de l'accélération différentielle (a_diff), une fois multipliée par le facteur (k), avec un temps mort (T_t) pouvant être imposé.

7. Système de direction (1) selon une des revendications 4 à 6,
**caractérisé en ce que**
les troisièmes moyens (17) présentent un additionneur destiné à former le courant de convertisseur (I_w) par addition du premier courant de convertisseur (I_V) et du deuxième courant de convertisseur (I_a).

8. Servocommande (6) d'un système de direction assistée (1) d'un véhicule automobile, qui comprend une assistance de couple variable et comme installation de réglage un convertisseur (7) pouvant être attaqué avec un courant de convertisseur (I_w) pour l'angle de braquage des roues (3) du véhicule automobile, et des moyens (9) destinés à déterminer le courant de convertisseur (I_w) en fonction au moins de la vitesse (V) du véhicule automobile, le système de direction (1) ayant des moyens de dynamique de marche (4) servant à superposer un angle de correction à l'angle de braquage, l'angle de correction étant calculé du point de vue d'une amélioration de la stabilité de marche et/ou du confort de marche du véhicule automobile, alors que les moyens (9) servant à déterminer le courant de convertisseur (I'_w) déterminent ce courant en fonction d'au moins une grandeur des moyens de dynamique de marche (4) qui **caractérisent** l'angle de correction, et dans lequel les moyens de dynamique de marche (4) présentent un moteur (5) destiné à produire l'angle de correction,
**caractérisé en ce que**
dans la servocommande (6), l'accélération réelle (a_ist) du moteur (5) et/ou l'accélération de consigne (a_soll) du moteur (5) sont traitées en tant que grandeurs des moyens de dynamique de marche (4) qui **caractérisent** l'angle de correction.

9. Procédé pour calculer le courant de convertisseur (I_w) d'une servocommande (6), réalisée sous la forme d'une assistance de couple variable, d'un système de direction assistée (1) d'un véhicule automobile, dans lequel la servocommande (6) comprend un convertisseur (7) pouvant être attaqué avec le courant de convertisseur (I_w) en tant qu'installation de réglage pour l'angle de braquage des roues (3) du véhicule automobile et le courant de convertisseur (I_w) est calculé en fonction d'au moins la vitesse (V) du véhicule automobile, dans lequel le système de direction (1) comprend des moyens de dynamique de correction servant à superposer un angle de correction à l'angle de braquage, l'angle de correction étant calculé du point de vue d'une amélioration de la stabilité de marche et/ou du confort de marche du véhicule automobile, et le courant de convertisseur (I_w) étant calculé en fonction d'au moins une grandeur des moyens de dynamique de marche (4) qui **caractérisent** l'angle de correction, et dans lequel les moyens de dynamique de marche (4) comprennent un moteur (5) servant à produire l'angle de correction,
**caractérisé en ce que**
l'accélération réelle (a_ist) du moteur (5) et/ou l'accélération de consigne (a_soll) du moteur (5) sont traitées en tant que les grandeurs des moyens de dynamique de marche (4) qui **caractérisent** l'angle de correction.
